(19) Europäisches Patentamt
European Patent Office
Office européen des brevets

(11) EP 4 375 879 A1

(12) EUROPEAN PATENT APPLICATION

(43) Date of publication:
29.05.2024 Bulletin 2024/22

(21) Application number: 23211676.4

(22) Date of filing: 23.11.2023

(51) International Patent Classification (IPC):
G06N 3/0464 (2023.01)    G06N 3/084 (2023.01)
G06N 3/09 (2023.01)

(52) Cooperative Patent Classification (CPC):
G06N 3/09; G06N 3/0464; G06N 3/084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.11.2022 US 202263427762 P

(71) Applicant: Google LLC
Mountain View, CA 94043 (US)

(72) Inventors:
• BEYER, Lucas Klaus
8002 Zurich (CH)
• IZMAILOV, Pavel
New York, 10001 (US)
• KORNBLITH, Simon
Toronto, M5H 2G4 (CA)

• KOLESNIKOV, Alexander
8002 Zurich (CH)
• CARON, Mathilde
75009 Paris (FR)
• ZHAI, Xiaohua
8002 Zurich (CH)
• MINDERER, Matthias Johannes Lorenz
8002 Zurich (CH)
• ALABDULMOHSIN, Ibrahim
8002 Zurich (CH)
• TSCHANNEN, Michael Tobias
8045 Zurich (CH)
• PAVETIC, Filip
8002 Zurich (CH)

(74) Representative: Varley, James Richard
Venner Shipley LLP
200 Aldersgate
London EC1A 4HD (GB)

(54) TRAINING LARGE-SCALE VISION TRANSFORMER NEURAL NETWORKS WITH VARIABLE PATCH SIZES

(57) This specification relates to training neural networks. This specification describes a system implemented as computer programs on one or more computers in one or more locations that trains a Vision Transformer neural network (ViT). A ViT is a neural network that processes an input that includes an image, i.e., that processes the intensity values of the pixels of the image, to generate an output for the image, e.g., a classification or a regression output, and that includes one or more self-attention layers and one or more output layers.

FIG. 1

EP 4 375 879 A1

**Description**

BACKGROUND

This specification relates to training neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a system implemented as computer programs on one or more computers in one or more locations that trains a Vision Transformer neural network (ViT). A ViT is a neural network that processes an input that includes an image, i.e., that processes the intensity values of the pixels of the image, to generate an output for the image, e.g., a classification or a regression output, and that includes one or more self-attention layers and one or more output layers.

The subject matter described in this specification can be implemented in particular embodiments so as to realize one or more of the following advantages.

Some neural networks, e.g., Vision Transformers (ViTs) convert images to sequences by slicing them into patches. The size of these patches controls a speed/accuracy tradeoff, with smaller patches leading to higher accuracy at greater computational cost, but changing the patch size typically requires retraining the model. This specification generally describes techniques for repeatedly adjusting the patch size of image patches during the training of the neural network. This leads to a single trained neural network, i.e., with a single set of weights, that performs well across a wide range of patch sizes, making it possible to tailor the model to different compute budgets at deployment time.

In other words, this specification describes modifications to the architecture, the training, or both of a ViT. The described modifications include varying the image patch generation scheme for each step of the training process and allows the system to pre-train a ViT neural network that then achieves state-of-the-art performance on any of a variety of downstream tasks with tunable precision and computational cost. In particular, when a variable image patch generation scheme is adopted during the training process, the deployed ViT can operate across a range of image patch sizes and act as a backbone for fine-tuning models for specific downstream tasks.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example neural network training system with a variable image patch generation system.
FIG. 2 shows the processing of a single image by a trained ViT.
FIG. 3 is a flow diagram of the process of training a ViT with a variable image patch generation system.
FIG. 4 shows the processing of an image through a variable patch generation system.
FIG. 5 shows the processing of image patches through an image patch embedding system with variable patch sizes.
FIG. 6 depicts the ability of a ViT trained with variable patch sizes to process multiple patch sizes with high accuracy.
FIG. 7 demonstrates the accuracy of a ViT trained on multiple image patch sizes compared to the accuracy of ViTs trained on fixed image patch sizes.

Like reference numbers and designations in the various drawings indicate like elements.

DETAILED DESCRIPTION

This specification describes a system implemented as computer programs on one or more computers in one or more locations that trains a Vision Transformer neural network (ViT).

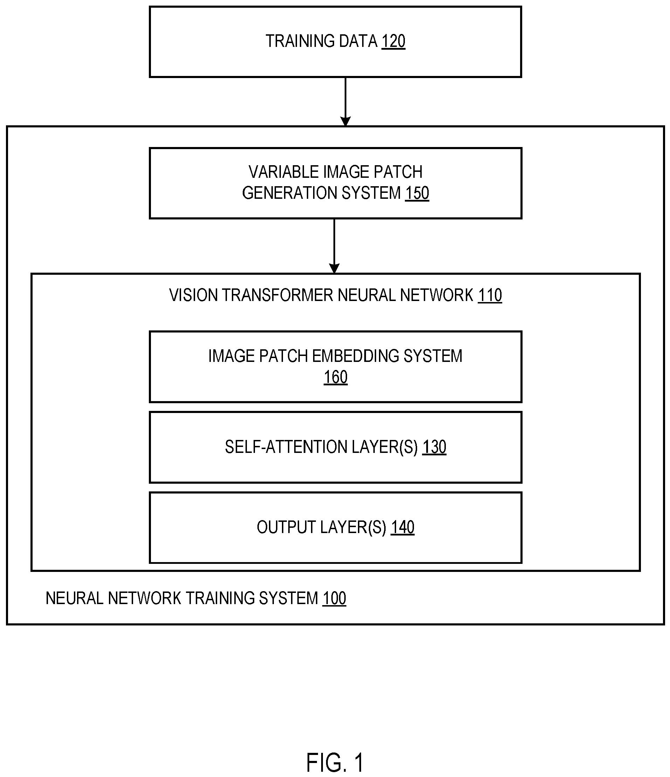

FIG. 1 is a diagram of an example neural network training system 100. The neural network training system 100 is an example of a system implemented as computer programs on one or more computers in one or more locations, in which the systems, components, and techniques described below can be implemented.

The neural network training system 100 is configured to train a Vision Transformer (ViT) neural network 110.

The ViT 110 is configured to process an input image to generate an output for the input image.

The ViT 110 contains an image patch embedding system 160 that processes a plurality of image patches from the input image to generate an input sequence that includes a respective input element ("patch embedding") at each of a plurality of positions. Each patch is a respective spatial region within the input image.

Generally, the input sequence includes a respective input element corresponding to each of the plurality of image patches.

In some implementations, for each image patch, the respective input element corresponding to the image patch is generated from a combination of an embedding of the intensity values of the pixels in the image and an embedding of its respective position ("positional embedding") within the image. The positional embeddings are learned embeddings that contain information about where the patch is located with respect to other patches in the image.

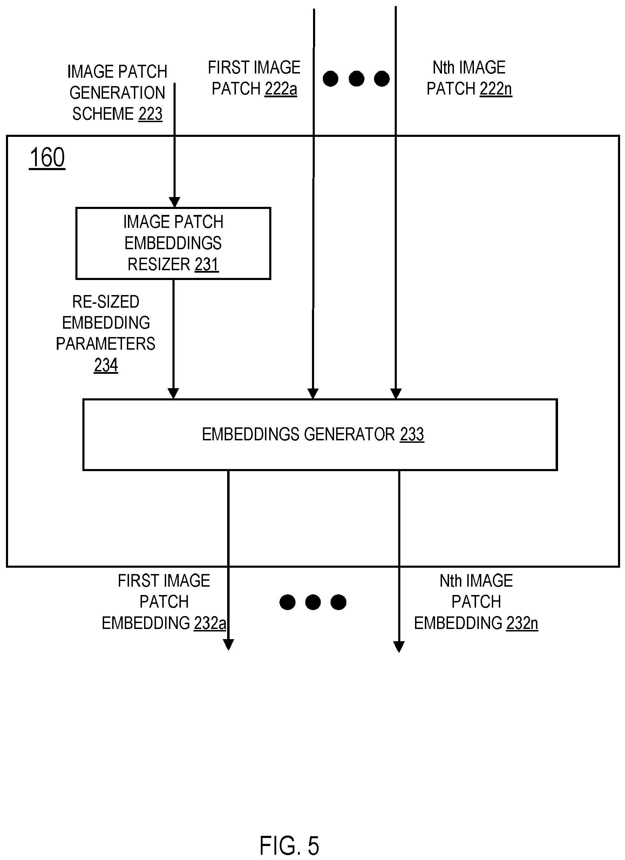

Further detail regarding the image patch embedding system is described in more detail below with reference to FIG. 5.

The ViT 110 processes the input sequence through a plurality of self-attention neural network blocks, to generate an output sequence that includes a respective output element at each of the positions, i.e., for each input element in the input sequence. The blocks are referred to as "self-attention" neural network blocks because each of the blocks includes one or more self-attention layers 130 that each applies a self-attention mechanism over the elements in the input sequence (as received by the block) as part of updating the input sequence.

The VIT 110 then processes one or more of the output elements using the one or more output layers 140 to generate an output for the image, e.g., a classification output or a different output for a different task.

In other words, the output of the ViT 100 can take several forms. A classification output generally includes a respective score corresponding to each of multiple categories. The score for a category indicates a likelihood that the image belongs to the category. In some cases, the categories may be classes of objects (e.g., dog, cat, person, and the like), and the image may belong to a category if it depicts an object included in the object class corresponding to the category. In some cases, the categories may represent global image properties (e.g., whether the image depicts a scene in the day or at night, or whether the image depicts a scene in the summer or the winter), and the image may belong to the category if it has the global property corresponding to the category.

Example configurations of ViTs are described in more detail below.

To train the ViT 110, the system 100 obtains first training data 120.

The first training data 120 includes a plurality of training images and a respective target output for each training image. For example, the target outputs can be ground truth image labels from a standard supervised learning process. As another example, the target outputs can be the outputs of a larger, pre-trained "teacher" neural network for the training images. For example, the pre-trained neural network can be a ViT with more parameters than the ViT 110.

The system 100 then trains the ViT neural network 110 on the first training data 120, e.g., through supervised learning to minimize an appropriate classification loss, e.g., a loss function that includes a cross-entropy loss between the target classification output for a given training image and the classification output generated by the ViT 110 for the given training image and, optionally, one or more regularization terms.

After this training, the system 100 can use the trained ViT 110 to perform the classification task on new input images or provide data specifying the trained ViT 110 for use in performing the classification task.

Alternatively or in addition, the system 100 can train a downstream neural network that includes the self-attention blocks 130 jointly with another set of output layers on a different, downstream task, e.g., on a different classification task or on a regression task, i.e., on training data for the downstream task.

As a particular example, the neural network training system 100 can configure the downstream neural network that includes the self-attention blocks and the other set of output layers to generate a classification output. The classification output can include a respective score corresponding to each of multiple categories, where the multiple categories are different from those used in the initial training. This is referred to as fine-tuning the pre-trained ViT 110 on new data related to a specific downstream task that may or may not have been present in the initial training data.

The original and downstream tasks can be any of a variety of computer vision tasks.

For example, the original task, the downstream task, or both can be a classification task, i.e., a task in which the network output can be a classification output. A classification output generally includes a respective score corresponding to each of multiple categories. The score for a category indicates a likelihood that the image belongs to the category. In some cases, the categories may be classes of objects (e.g., dog, cat, person, and the like), and the image may belong to a category if it depicts an object included in the object class corresponding to the category. In some cases, the categories may represent global image properties (e.g., whether the image depicts a scene in the day or at night, or whether the image depicts a scene in the summer or the winter), and the image may belong to the category if it has the global property corresponding to the category.

As another example, the tasks can include one or more object detection tasks. In an object detection task, the output generated by the neural network identifies locations, e.g., bounding boxes or other regions, in the input image at which types of objects are depicted.

As another example, the tasks can include one or more instance segmentation tasks. In an instance segmentation task, the output generated by the neural network identifies, for each pixel in the image that belongs to a particular object type, the object instance that the pixel corresponds to.

As another example, the tasks can include one or more semantic segmentation tasks. In a semantic segmentation task, the output generated by the neural network identifies, for each pixel in the image, which of multiple categories the pixel belongs to.

As another example, the tasks can include one or more depth prediction tasks. In a depth prediction task, the output generated by the neural network identifies, for each pixel in the image, a predicted depth of the scene at the pixel.

As another example, the tasks can include one or more surface normal prediction tasks. In a surface normal prediction task, the output generated by the neural network identifies, for each pixel in the image, a predicted surface normal of the scene at the pixel.

In some implementations, for either the downstream task training or the original training performed by the system 100, the neural network is trained with a text processing neural network to perform a multi-modal task that requires processing both text and image inputs. That is, the target output to be generated for a given image depends on one or more outputs generated by the text processing neural network for one or more corresponding text inputs. Examples of such tasks include open-vocabulary image classification, open-vocabulary object detection, image captioning, text-based image search, image-based retrieval, and so on.

After this training, the system 100 can use the trained downstream neural network to perform the downstream task on new input images or provide data specifying the trained downstream neural network for use in performing the classification task.

The size of the image patches that are provided as input to the ViT 110 controls a tradeoff between the accuracy and the speed of the ViT 110. A smaller patch size leads to a ViT 110 that performs with higher accuracy at greater computational cost. On the other hand, a trained ViT 110 performs with lower accuracy at reduced computational cost when the neural network training system 100 uses a larger patch size, i.e., the input images are sliced into larger sub-images.

At time of deployment, when the model is used to make predictions or to perform the downstream task, a particular downstream application may require higher resolution (smaller patch size) than other downstream applications. In particular, some downstream tasks such as object detection, may require a higher resolution (smaller patch size) in some environments or for detecting some classes of objects. A system performing object detection on low resolution images (small number of pixels) or on a class of objects with large differentiating features may require a corresponding low resolution image patch generation scheme (larger patch size) to maintain high accuracy. Alternatively, a system that performs object detection on high resolution images (large number of pixels) or on a class of objects with small differentiating features may require a corresponding high resolution image patch generation scheme (smaller patch size) to capture the differentiating details. The patchification process may average out small or subtle features that differentiate one object from another when the patch size is too large.

As another example, a particular downstream application may require greater computational efficiency (and therefore larger patch sizes) than others.

The ability to dynamically change the patch size at the time of deployment offers greater flexibility to tune the performance and computational cost depending on the specific downstream task.

However, a neural network training system 100 that uses a fixed patch size during training trains a ViT 110 that only achieves high accuracy at deployment within a small range of patch sizes near the fixed patch size chosen for training. Thus, a neural network training system 100 that uses a fixed patch size trains a ViT 110 that must be deployed with the same fixed patch size for all downstream applications to maintain maximum accuracy.

In some implementations, to account for this, the neural network training system 100 is designed to generate image patches during training by making use of a variable image patch generation system 150.

The variable image patch generation system 150 selects an image patch generation scheme from a plurality of image patch generation schemes for each training step, so that the patch size differs across different training steps.

Given an input image, each of the plurality of image patch generation schemes generates a different number of patches of the input image, where each patch includes a respective subset of the pixels of the input image, i.e., is a non-overlapping or overlapping subset of the pixels of various sizes.

For example, the plurality of image patch generation schemes can divide an image into patches with a corresponding stride, with the corresponding stride being different for each of the plurality of image patch generation schemes.

As another example, the plurality of image patch generation schemes can each divide an image into non-overlapping patches, with each patch having the same size but the size being different for different schemes.

Generally, the variable image patch generation system 150 selects the scheme such that different schemes are selected at different training steps, i.e., so that any given training step will have a different scheme than a subset of the other training steps.

As a result of being trained using a variable image patch generation system 150, the trained ViT 110 maintains maximum accuracy and can operate efficiently across a plurality of patch sizes.

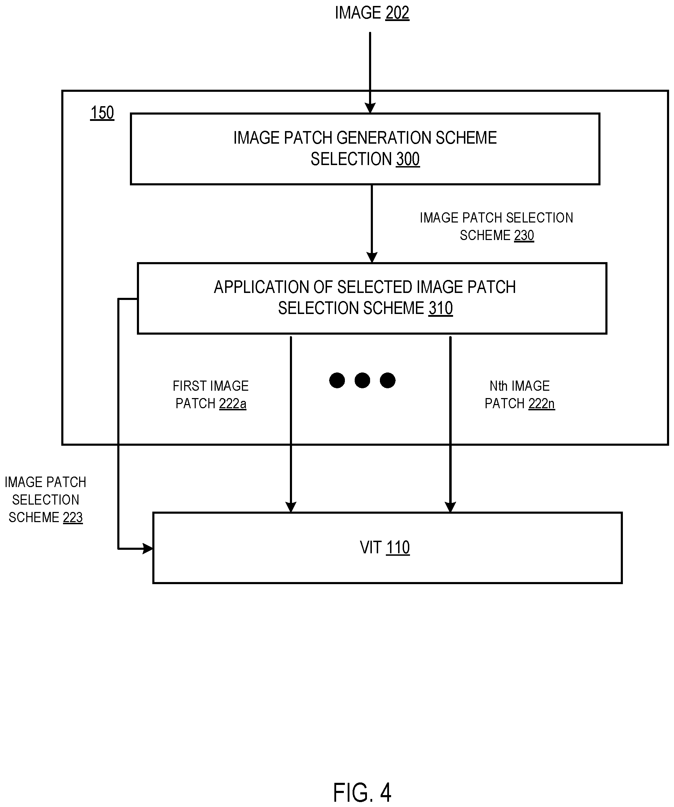

Further detail regarding the variable image patch generation system 150 is described in more detail below with reference to FIG. 4.

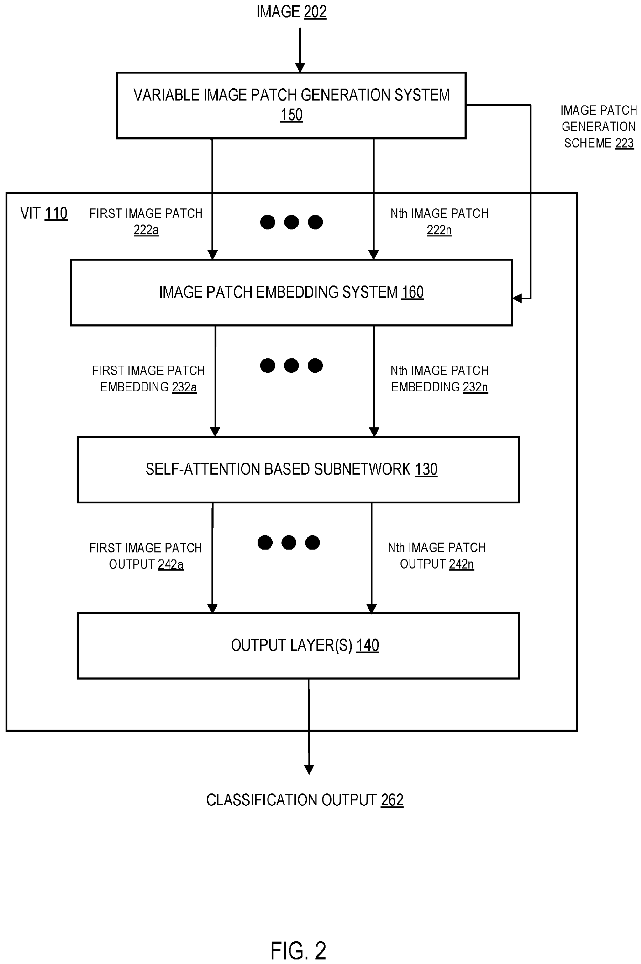

FIG. 2 is a diagram that depicts the processing of an image 202 through a ViT 110. First, a variable image patch generation system 150 processes an image, as depicted in FIG. 4.

The variable image patch generation system 150 outputs a plurality of output image patches 222a-n.

The variable image patch generation system 150 feeds the output image patches 222a-n into the ViT 110.

An image patch embedding system 160 processes each image patch 222a-n.

In addition, the image patch embedding system 160 accepts details about which image patch generation scheme 223 was chosen, such as the corresponding patch size, in order to appropriately resize the embedding parameters, as discussed in detail below. The ViT 110 processes a sequence that includes a plurality of embeddings 232a-n corresponding to the input image patches 222a-n using a self-attention subnetwork 240 to generate a first set of image patch outputs 242a-n. As described above, the self-attention subnetwork 240 includes a sequence of layer blocks that each applies a self-attention mechanism over the elements in the input sequence (as received by the block) as part of updating the input sequence.

The ViT 110 then processes one or more of the first set of image patch outputs 242a-n using a sequence of output neural network layers 140 to generate a classification output 262. Alternatively or in addition, the ViT can produce additional outputs which depend on the desired output of the downstream task, e.g., regression outputs or outputs for auxiliary losses being used during training.

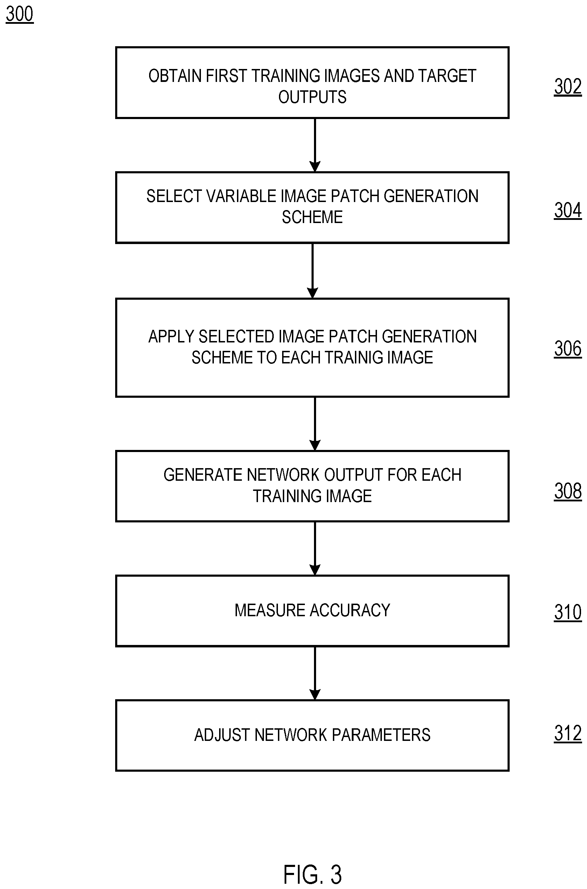

FIG. 3 is a flow diagram of an example process 300 for training a ViT using a neural network training system. For convenience, the process 300 will be described as being performed by a system of one or more computers located in one or more locations. For example, a neural network training system, e.g., the neural network training system 100 depicted in FIG. 1, appropriately programmed in accordance with this specification, can perform the process 300.The system trains the ViT over a plurality of training steps.

During each training step of the plurality of training steps, the system obtains a plurality of training images and corresponding target outputs 302 for the training step.

Next, the system selects an image patch generation scheme 304 from a plurality of available image patch generation schemes.

The system applies the selected image patch generation scheme on a plurality of images corresponding to the training step 306 to generate, for each training image, a plurality of image patches.

For each image, the system then processes the plurality of image patches through a plurality of neural network layers that may include self-attention layers and additional output layers.

The system then generates an output 308, e.g., a classification or a regression output, for each training image and measures the accuracy relative to the target outputs of the input training data 310.

The system computes an adjustment to the weights ("parameters") of the ViT and adjusts the network parameters accordingly 312. For example, the system can compute gradients with respect to the network parameters of a loss function that includes one or more terms that measure the accuracy and then apply an optimizer, e.g., Adam, AdamW, rmsProp, Adafactor, and so on, to the gradients to update the network parameters.

The system proceeds to the next training step with the updated parameters and continues to adjust the parameters of the neural network to minimize the loss function.

FIG.4 is a diagram that depicts how the variable image patch generation system 150 processes an image prior to the ViT 110 processing the image.

The neural network training system 100 can configure the image patch generation system 150 to apply an image patch generation scheme to the input image 202 in a variety of manners.

In particular, the system 150 performs image patch generation scheme selection 300 to selects an image patch generation scheme 230.

Conventionally, the system 100 would select the same image patch generation scheme 230 for each training step. This strategy generates image patches with a fixed size across all training steps. This is the standard approach to training ViTs.

Instead, in some implementations, for each training step, the system 150 samples an image patch generation scheme 230 from a random distribution of pre-defined allowed schemes.

In some other implementations, for each training step, the system 150 samples an image patch generation scheme 230 from a specific non-uniform probability distribution. For example, the system 150 can sample an image patch generation scheme 230 for each training step from a Gaussian probability distribution with a pre-defined standard deviation and centerpoint, such that a range of schemes in the center of the distribution are more likely to be selected compared to the ranges of schemes towards the edges of the distribution.

In some other implementations, for each training step, the system 150 samples an image patch generation scheme 230 from a randomly selected non-uniform probability distribution. For example, for each training step, the system 150 can first sample from a set of allowed probability distributions (i.e. Gaussian, uniform random, or linear). Then the system 150 can sample an image patch selection scheme 230 from the selected probability distribution for that training step.

In some other implementations, for each training step, the system 150 samples an image patch generation scheme 230 from a probability distribution, wherein the probability distribution is one of a sequence of probability distributions that are each associated with a respective subset of the plurality of training steps.

In some other implementations, the system 150 can select an image patch generation scheme 230 using any manner of selecting a probability distribution for each training step and sampling from the probability distribution to select an image patch generation scheme 230.

The system 150 applies the selected image patch scheme 230 to the input image. The variable image patch generation scheme 150 sends the image patches 222a-n along with details about the selected image patch scheme 223 including the number of image patches that were used for the selected image patch generation scheme 230 to the ViT 110.

The variable image patch generation system 150 processes a plurality of input images 112a-n independently, i.e., sequentially or in parallel. The variable image patch generation system 150 generates a sequence of s patches 122a-n for each input image 112a-n. The number of image patches in each sequence depends on the patch size as defined by the selected image patch generation scheme 230. In some implementations, the number of image patches in each image patch sequence 122a-n can be written as

$$ s = \left[\frac{h}{p}\right] \times \left[\frac{w}{p}\right] $$

where h is the height of the input images 112a-n, w is the width of the input images 112a-n, and p is the patch size that corresponds to the selected image patch generation scheme 230. The height and the width of the input images 112a-n are typically uniform, but in some implementations, the variable image patch generation system 150 can be configured to employ a normalization strategy to create sequences of patches 122a-n across all of the non-uniform images 112a-n in a training step with a single image patch generation scheme 230. The variable image patch generation system 150 sends the image patches 122a-n to the image patch embedding system 160

Fig. 5 shows the image patch embedding system 160 that processes each of the n image patches 222a-n.

Each image patch embedding 232a-n represents the pixels of the corresponding image patch 222a-n and can be generated by processing the pixels of the corresponding image patch 222a-n. In this specification, an embedding is an ordered collection of numeric values that represents an input in a particular embedding space. For example, an embedding can be a vector of floating point or other numeric values that has a fixed dimensionality.

In some implementations in which each image patch 222a-n is represented as a two-dimensional sub-image of the image 202, each image patch embedding 232a-n is a reshaped version of the corresponding image patch 222a-n. For example, the image patch embedding system 160 can "flatten" each image patch 222a-n to generate an image patch embedding 232an that is a one-dimensional tensor that includes each pixel in the image patch 222a-n. As a particular example, if each image patch 222a-n has dimensionality $L \times W \times C$, where $C$ represents the number of channels of the image (e.g., $C = 3$ for an RGB image), then the image patch embedding system 160 can generate an image patch embedding 232a-n that has dimensionality $1 \times (L \cdot W \cdot C)$.

In some other implementations, the image patch embedding system 160 can process a one-dimensional tensor that includes the pixels of the image patch 222a-n (e.g., a flattened version of the image patch 222a-n) to generate the corresponding image patch embedding 232an. As described in more detail below, the image patch embeddings 232a-n are to be processed by the ViT 110, which has been configured through training to accept inputs having a particular format, e.g., a particular size and shape. Thus, the image patch embedding system 160 can project each image patch 222a-n into a coordinate space that has the dimensionality required by the ViT 110.

For example, the image patch embedding system 160 can process each image patches 222a-n using a linear projection:

$$ z_i = x_i E_i + b_i $$

where $z_i \in \mathbb{R}^D$ is the $i^{th}$ image patch embedding 232a-n, $D$ is the input dimensionality required by the ViT 110, $x_i \in \mathbb{R}^N$ is the one-dimensional tensor including the $i^{th}$ image patch 222a-n, N is the number of pixels in the $i^{th}$ image

patch 222a-n, $E_i \in R^{N \times D}$ is a projection matrix, and $b_i \in \mathbb{R}^D$ is an optional linear bias term.

In some implementations, the image patch embedding system 160 uses a respective different projection matrix $E_i$ to generate each image patch embedding 232a-n; in some other implementations, the image patch embedding system 160 uses the same projection matrix $E$ to generate each image patch embedding 232a-n. Similarly, in some implementations, the image patch embedding system 160 uses a respective different bias term $b_i$ to generate each image patch embedding 232a-n; in some other implementations, the image patch embedding system 160 uses the same bias term $b_i$ to generate each image patch embedding 232a-n.

In some implementations, the linear projection is machine-learned. For example, during training of the ViT 110, the neural network training system 100 can concurrently update the parameters of the linear projection (e.g., the parameters of the projection matrices $E_i$ and bias terms $b_i$). As a particular example, the training system can update the parameters of the linear projection by backpropagating a training error of the ViT 110 through the ViT 110 and to the image patch embedding system 160, and determining the update using stochastic gradient descent on the backpropagated error during the training on the first training data 120.

Instead of or in addition to processing the one-dimensional tensors corresponding to the image patches 222a-n with a linear projection, the image patch embedding system 160 can process the one-dimensional tensors using an embedding neural network. For instance, the embedding system 160 can be considered a component of the ViT 110. That is, the embedding system 160 can be an embedding subnetwork of the ViT 110 that includes one or more neural networks layers that are configured to process the one-dimensional tensors and to generate the image patch embeddings 232a-n.

For example, the embedding neural network can include one or more feedforward neural network layers that are configured to process a one-dimensional tensor corresponding to the image patch 222a-n.

As another example, the embedding neural network can include one or more self-attention neural network layers that are configured to process each one-dimensional tensor corresponding to a respective image patch 222a-n concurrently using a self-attention mechanism.

As another example, the embedding neural network can include one or more convolutional neural network layers that are configured to process an image patch 222a-n using a convolutional filter. As a particular example, if the image patches 222a-n are represented as two-dimensional images, the image patch embedding system 160 can process each (unflattened) image patch 222a-n using one or more convolutional neural network layers to generate a feature map of the image patch 222a-n. The image patch embedding system 160 can then flatten the feature map and process the flattened feature map using a linear projection, as described above, to generate the corresponding image patch embedding 232a-n.

As another particular example, the image patch embedding system 160 can process the entire image 202 using one or more convolutional neural network layers to generate a feature map of the image 202. The feature map can be two-dimensional (or, like the image 202, can be two-dimensional where each element has multiple channels). The neural network training system 100 can then determine $n$ patches of the feature map of the image 202, where each patch includes one or more elements of the feature map. That is, instead of segmenting the image 202 itself into the image patches 222a-n, the variable image patch generation system 150 can segment the feature map of the image 202 generated by the embedding neural network of the image patch embedding system 160. As a particular example, each patch can include a single element of the feature map. The image patch embedding system 160 can then generate the image patch embeddings 232a-n from the $n$ patches of the feature map, e.g., by applying a linear projection to the patches of the feature map as described above.

After the image patch embedding system 160 generates the image patch embeddings 232a-n, the neural network training system 100 can generate the input sequence to be provided as input to the ViT 110 from the image patch embeddings 232a-n. Generally, the input sequence includes one or more input elements corresponding to respective image patch embeddings 232a-n. For example, the input sequence can include a respective input element corresponding to each of the n image patch embeddings 232a-n. As a particular example, the input elements corresponding to the $n$ image patch embeddings 232a-n can be sorted in the input sequence in the raster order of the corresponding image patches 222a-n.

In some implementations, the input element in the input sequence corresponding to an image patch embedding 232a-n is equal to the image patch embedding 232a-n itself.

In some other implementations, to generate the input element of the input sequence corresponding to an image patch embedding 232a-n, the neural network training system 100 can combine (i) the image patch embedding 232a-n and (ii) a positional embedding that represents the position within the image 202 of the image patch 222a-n corresponding to the image patch embedding 232a-n. For example, the neural network training system 100 can append the positional embedding to the image patch embedding 232a-n. By incorporating the positional embeddings, the neural network training system 100 can encode spatial information, e.g., the relative positioning of each image patch in the image, that can be leveraged by the ViT 110 to generate the classification output 262.

In some implementations, the positional embedding corresponding to each image patch 222a-n of the image 202 is an integer. For example, a first image patch at the top left of the image 202 can have a positional embedding of '1', a second image patch immediately to the right of the first image patch can have a positional embedding of '2', and so on.

In some other implementations, the positional embeddings are machine-learned. For example, during the training of the ViT 110, a training system can concurrently learn the positional embeddings by backpropagating a training error of the ViT 110 through the ViT 110 and to the positional embeddings. In some such implementations, the training system can generate a respective different positional embedding for each image patch (e.g., assuming every image 202 received by the neural network training system 100 is segmented into the same number of patches).

In some other implementations, the training system can incorporate two-dimensional information into the positional embeddings by learning, for both dimensions of the image 202, a respective positional embedding for each coordinate along the dimension. For example, if the image 202 is segmented into a two-dimensional grid of image patches 222a-n, the training system can generate two sets of positional embeddings: a first set that includes a respective positional embedding for each index along the vertical axis of the grid and a second set that includes a respective embedding for each index along a horizontal axis of the grid. To generate the positional embedding for a particular image patch 222a-n, the neural network training system can combine, e.g., by concatenating, (i) the positional embedding corresponding to the index of the particular image patch 222a-n along the vertical axis, and (ii) the positional embedding corresponding to the index of the particular image patch 222a-n along the horizontal axis.

In some implementations, one or more of the input elements in the input sequence do not correspond to any image patch 222a-n of the image 202. For example, the input sequence can include a class embedding that is the same for all received images 102. For example, the class embedding can be a tensor having the same dimensionality as the image patch embeddings 232a-n. As a particular example, the class embedding can be a tensor of all '0's or all '1's.

The class embedding can be inserted at any position in the input sequence; e.g., the class embedding can be the first input element of the input sequence, or the last input element of the input sequence.

In some implementations, the class embedding is machine-learned. For example, during the training of the ViT 110, a training system can concurrently learn parameters for the class embedding by backpropagating a training error of the ViT 110 through the ViT 110 and to the class embedding.

In implementations in which the input element corresponding to each image patch 222an includes a positional embedding corresponding to the image patch 222a-n, the neural network training system 100 can append a positional embedding to the class embedding as well, e.g., a machine-learned positional embedding or a predetermined positional embedding (e.g., a positional embedding of all '0's or all '1's).

However, adding the class embedding to the input sequence requires the ViT 110 to process a longer input sequence. Given the configuration of modern hardware and the large number of parameters of the ViT 110, this can increase the memory overhead of the ViT, e.g., due to token padding required by modern machine learning accelerators.

In some implementations, to remove this memory overhead, the sequence does not include a class embedding, i.e., each element in the input sequence corresponds to a different patch of the image 202 and the sequence does not include any elements that do not correspond to patches.

After generating the input sequence, the neural network training system 100 provides the input sequence as an input to the ViT 110. The ViT 110 can process the input sequence to generate the classification output 262.

As described above, the neural network training system 100 configures the image patch embedding system 160 to accept image patches 222a-n with a patch size that varies between training steps.

Thus, the image patch embedding system 160 includes an image patch embeddings resizer 231 that adapts to a variable patch size corresponding to the selected image patch generation scheme 223 from the variable image patch generation system 150.

In some implementations, the patch and positional embedding parameters depend on the dimensionality of the input image patches 122a-n. Thus, the image patch embedding system 160 resizes the corresponding parameters according to the dimensionality of the image patches 122a-n corresponding to the selected image patch generation scheme 223.

The image patch embeddings resizer 231 can use a plurality of numerical techniques to resize the embedding parameters according to the dimensionality of the image patches 122a-n corresponding to the selected image patch generation scheme 232.

In particular, the embedding system maintains a set of original image patch embedding parameters ("weights") and a set of positional embedding parameters ("weights") that are shared across patch sizes and training steps. At each training step, the resizer 231 resizes the shared sets of patch embedding parameters and the set of positional embedding parameters to match the image patch generation scheme 223 that has been selected for the training step.

Thus, after training or for downstream training with a fixed patch size, the resizer 231 can resize the trained shared sets of positional embedding parameters and image patch embedding parameters to match the fixed patch size.

In some implementations, the patch embeddings resizer 231 uses a linear resize transformation which can be represented by a linear transformation:

$$resize_p^{p*}(o) = B_p^{p*} vec(o)$$

Where $o \in \mathbb{R}^{pxp}$ is any input, and $B_p^{p*} \in \mathbb{R}^{p_*^2 x \, p^2}$. The patch embeddings resizer 231 resizes channels of multi-channel inputs (i.e. corresponding to multiple colors) o independently. To find a new set of image patch embedding weights, wherein embeddings of the resized patch matches the embeddings of the original patch, the patch embeddings resizer 231 must solve the optimization problem:

$$\widehat{\omega} \in \arg\min_{\widehat{\omega}} E_{x \sim X}[(\langle x, \omega \rangle - \langle Bx, \widehat{\omega} \rangle)^2],$$

where $\hat{\omega}$ represents the resized embedding weights, $B = B_p^{p*}$ and $\chi$ is some distribution over the patches. In the case wherein the patch size is increasing $p_* \geq p$, the resized embeddings can be written as $\hat{\omega} = P\omega$ where $P = B(B^TB)^{-1} = (B^T)^+$ is the pseudoinverse of $B^T$:

$$\langle Bx, \widehat{\omega} \rangle = x^T B^T B (B^T B)^{-1} \omega = x^T \omega = \langle x, \omega \rangle.$$

In the case wherein the patch size is decreasing $p_* < p$, the solution to the optimization equation presented above will in general depend on the patch distribution $\chi$. In this example, the pseudoinverse can be written as $\hat{\omega} = P\omega = (B^T)^+\omega$.

Thus, the patch embeddings resizer 231 implements a pseudoinverse resize transformation for both cases of increase patch size and decreasing patch size. The expression for the pseudoinverse resizing transformation can be written as:

$$\text{Pi-resize}_p^{p*}(\omega) = \left( \left( B_p^{p*} \right)^T \right)^+ vec(\omega) = P_p^{p*} vec(\omega)$$

where $P_p^{p*} \in \mathbb{R}^{p_*^2 x p^2}$ is the matrix corresponding to the pseudo-inverse resize transformation.

The patch embedding system 160 resizes the positional embeddings to match the parameters of the selected patch generation scheme 223. When the patch size changes, the shared positional embeddings may not correspond to the correct positions of each patch, since the number of patches is different for each training step. As the selected patch generation scheme 223 changes, the patch embedding system 160 can adjust the positional embeddings to reflect the new patch size.

In some implementations, the patch embedding system 160 resizes the shared positional embeddings that are shared across all possible patch generation schemes. The patch embedding system 160 performs an interpolation procedure, for example a bilinear interpolation, to scale the shared positional embeddings to reflect the accurate position of the image patches with respect to other image patch generation schemes. In addition, the image patch embedding system 160 can combine the resized patch embeddings of the image with the interpolated positional embeddings that corresponds to the position of the image patch within the image as the input to the self-attention neural network 130. By combining the positional and patch embeddings, both the features of the pixels within the patch and the position of the patch in the image are encoded in the input aggregate embedding.

In some implementations, after the system 100 trains the ViT 110, the system 100 or a distinct neural network training system trains the resulting pre-trained ViT 110 to perform a downstream task. The training system can therefore fine-tune the pre-trained neural network with training inputs specific to a downstream task, making use of the same patch generation scheme used to pre-train the ViT 110 or a distinct patch generation scheme from the patch generation scheme used to train the pre-trained ViT 110.

For example, the training system can fine-tune the pre-trained ViT 110, with a fixed patch size. The fine-tuned neural network exhibits the same performance across a plurality of patch sizes, even though it is fine-tuned with a fixed patch size. Since the pre-trained ViT 110 is trained with variable patch sizes, the fine-tuned neural network retains its high performance across multiple patch sizes.

In some implementations, a neural network training system pre-trains a ViT 110 with an image patch generation scheme, S1. A neural network training system may fine-tune the pre-trained ViT 110 with an image patch generation scheme, S2. A fine-tuned instance of the pre-trained ViT 110, specific to a downstream task, may be deployed with an image patch generation scheme, S3. The image patch generation schemes S1, S2, S3 may or may not be identical, of the same type (fixed or variable), or related. S1, S2, and S3 may generate more or fewer image patches consistent with the respective image patch generation schemes compared to the other image patch generation schemes.

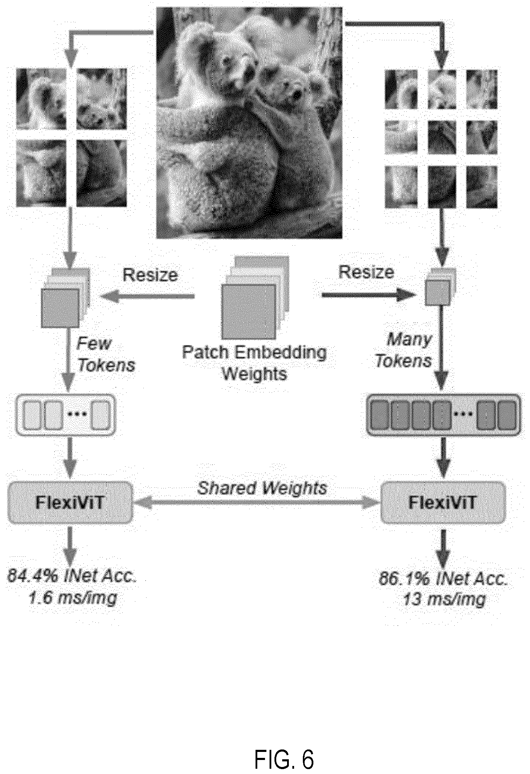

FIG. 6 shows the flow of a single image chosen from a plurality of images 102 through a ViT 110. A neural network training system 100 trains a ViT 110 using a variable image patch generation system 150. FIG. 6 demonstrates a choice of two image patch generation schemes 232 selected from a plurality of available image patch generation schemes. FIG. 6 demonstrates two selected image patch generation schemes 232, wherein one selected image patch generation scheme 232 is comprised of four image patches, and one selected image patch generation scheme 232 is comprised of 9 image patches. The image patch generation scheme 232 comprised of four image patches is computationally cheaper while performing downstream tasks with lower accuracy. The image patch generation scheme 232 comprised of nine image patches is computationally more expensive while gaining performance on downstream tasks. After the "patchification" process, FIG. 6 depicts the resizing of shared embedding weights regardless of the patch size. The image patch embedding resizer 231 resizes the embedding weights according to the number of patches in the selected image patch generation scheme 232.

The image patch embedding system 160 sends the resized image patch embeddings to the ViT 110, which is trained using a variable image patch generation system 150. The ViT 110 does not need to know the details of the "patchification" process, or how many patches are in the input image. The ViT 110 trained with a variable image patch generation system 150 retains a high degree of accuracy across multiple patch sizes, as depicted in FIG. 6.

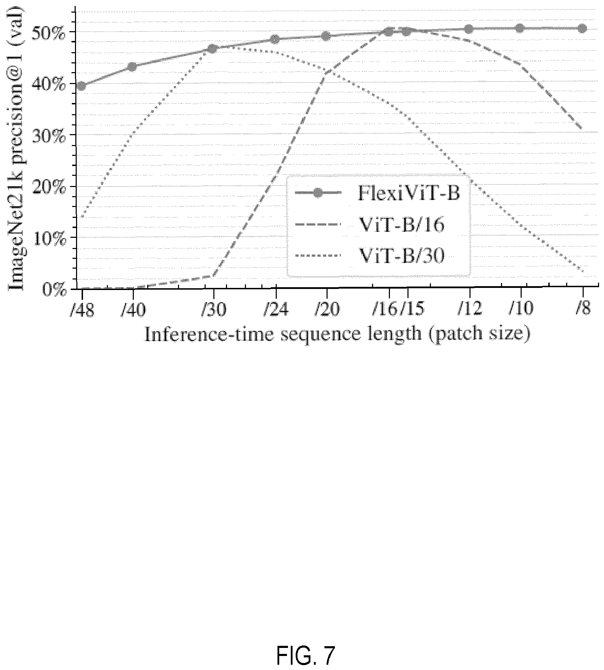

FIG. 7. demonstrates the patch size dependence on ViT 110 models trained with a neural network training system 100 that employs fixed patch sizes compared with a neural network training system 100 that employs variable patch sizes. When deployed, a pre-trained ViT 110 can choose which patch size to process input images. When deployed, a pre-trained ViT 100 that underwent training with fixed patch sizes (ViT-B/16 and ViT-B/30) delivers peak output classification performance that matches its training patch size (16 and 30 respectively). Alternatively, a pre-trained ViT 100 that underwent training with variable patch sizes (FlexiVit-B) delivers peak output classification performance across a wide range of patch sizes. The decoupling of patch size and performance is advantageous because the patch size is a convenient lever to control the overall precision and computational cost of a deployed ViT 110 neural network.

This specification generally describes that the neural network being trained with the variable patch sizes is a ViT. More generally, however, the described techniques for resizing patches during training can be used during the training of any neural network with any appropriate architecture that receives as input a set of image patches, i.e., rather than directly operating on the entire input image.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

This specification also includes the following clauses:

Clause 1: A method performed by one or more computers and for training a neural network that is configured to process an input image to generate a network output for the input image, the method comprising, at each of a plurality of training steps: obtaining a plurality of training images for the training step; obtaining, for each of the plurality of training images, a respective target output; selecting, from a plurality of image patch generation schemes, an image patch generation scheme for the training step, wherein, given an input image, each of the plurality of image patch generation schemes generates a different number of patches of the input image, and wherein each patch comprises a respective subset of the pixels of the input image; for each of the training images: generating a plurality of image patches of the training image by applying the selected image patch generation scheme to the training image; and processing the plurality of image patches using the neural network to generate a network output for the training image; and training the neural network on an objective that measures, for each training image, a difference between the network output for the training image and the target network output for the training image.

Clause 2: The method of clause 1, wherein each of the plurality of image patch generation schemes divides the input image into non-overlapping patches of a corresponding size, and wherein the corresponding size is different for each of the plurality of image patch generation schemes.

Clause 3: The method of clause 1, wherein each of the plurality of image patch generation schemes divides the input image into patches with a corresponding stride, and wherein the corresponding stride is different for each of the plurality of image patch generation schemes.

Clause 4: The method of any preceding clause, wherein the respective target output for each of the training images is a ground truth target output generated based on a label for the training images.

Clause 5: The method of any one of clauses 1-3, wherein the respective target output for each of the training images is an output generated by a trained teacher neural network by processing the training image.

Clause 6: The method of any preceding clause, further comprising: prior to training the neural network, initializing values of parameters of the neural network based on trained values of parameters of a trained teacher neural network.

Clause 7: The method of any preceding clause, wherein the neural network comprises an embedding subnetwork, a self-attention subnetwork, and an output subnetwork, and wherein processing the plurality of image patches using the neural network to generate a network output for the training image comprises: processing the plurality of image patches using the embedding subnetwork to generate a respective embedding for each of the image patches; processing an input sequence comprising the respective embeddings for each of the image patches using the self-attention subnetwork to generate a self-attention output for the training image; and processing the self-attention subnetwork using the output subnetwork to generate the network output for the training image.

Clause 8: The method of clause 7, wherein processing the plurality of image patches using the embedding subnetwork to generate a respective embedding for each of the image patches comprises: for each image patch, applying a set of patch embedding weights to the intensity values of the pixels in the image patch to generate an initial embedding of the image patch.

Clause 9: The method of clause 8, wherein the embedding subnetwork has a single set of patch embedding weights that has a first size and that is shared between the plurality of image patch generation schemes, and wherein applying the set of patch embedding weights comprises: resizing the set of patch embedding weights from the first size to have a size that matches a size of the image patch; and applying the resized set of patch embedding weights to the intensity values of the pixels in the image patch to generate an initial embedding of the image patch.

Clause 10: The method of clause 9, wherein training the neural network comprises adjusting the set of patch embedding weights that is shared between the plurality of image patch generation schemes.

Clause 11: The method of any one of clauses 8-10, wherein processing the plurality of image patches using the embedding subnetwork to generate a respective embedding for each of the image patches comprises: combining the initial embedding of the image patch with a learned positional embedding that corresponds to a position of the image patch within the training image to generate the embedding of the image patch.

Clause 12: The method of clause 10, wherein the embedding subnetwork has a single set of positional embeddings that is shared between the plurality of image patch generation schemes and that includes a respective positional embedding for each of a first set of positions, and wherein applying the set of patch embedding weights comprises: generating an interpolated positional embedding that corresponds to the position of the image patch from the single set of positional embeddings; and combining the initial embedding of the image patch with the interpolated positional embedding that corresponds to the position of the image patch within the training image to generate the embedding of the image patch.

Clause 13. The method of clause 12, wherein training the neural network comprises adjusting the single set of positional embeddings that is shared between the plurality of image patch generation schemes.

Clause 14: The method of any preceding claim, wherein selecting, from a plurality of image patch generation schemes, an image patch generation scheme for the training step comprises: sampling an image patch generation scheme from a probability distribution over the plurality of patch generation schemes for the training iteration.

Clause 15: The method of clause 14, wherein the probability distribution is a uniform distribution over the plurality of patch generation schemes.

Clause 16: The method of any one of clauses 14 or 15, wherein the probability distribution for the training step is one of a sequence of probability distributions that are each associated with a respective subset of the plurality of training steps.

Clause 17: The method of any preceding claim, wherein the target output for each of the training items is generated based on an output generated by a text processing neural network.

Clause 18: A method performed by one or more computers, the method comprising: obtaining data specifying a pre-trained neural network that has been trained by performing the respective operations of the method of any preceding claim; and fine-tuning the pre-trained neural network to perform a downstream task.

Clause 19: The method of clause 18, wherein fine-tuning the pre-trained neural network to perform a downstream task comprises processing training inputs for the downstream task using only a single, fixed image patch generation scheme.

Clause 20: The method of clause 19, further comprising: after fine-tuning the pre-trained neural network to perform the downstream task, performing the downstream task using the fine-tuned neural network by processing new inputs for the downstream task using a second image patch generation scheme that is different from the fixed image patch generation scheme.

Clause 21: The method of claim 20, wherein the fixed image patch generation scheme generates a smaller number of image patches than the second image patch generation scheme.

Clause 22: A system comprising one or more computers and one or more storage devices storing instructions that when executed by the one or more computers cause the one more computers to perform the operations of the respective method of any one of clauses 1-21.

Clause 23: One or more computer storage media storing instructions that when executed by one or more computers cause the one more computers to perform the operations of the respective method of any one of clauses 1-21.

**Claims**

1. A method performed by one or more computers and for training a neural network that is configured to process an input image to generate a network output for the input image, the method comprising, at each of a plurality of training steps:

   obtaining a plurality of training images for the training step;
   obtaining, for each of the plurality of training images, a respective target output;
   selecting, from a plurality of image patch generation schemes, an image patch generation scheme for the training step, wherein, given an input image, each of the plurality of image patch generation schemes generates a different number of patches of the input image, and wherein each patch comprises a respective subset of the pixels of the input image;
for each of the training images:

generating a plurality of image patches of the training image by applying the selected image patch generation scheme to the training image; and
processing the plurality of image patches using the neural network to generate a network output for the training image; and

training the neural network on an objective that measures, for each training image, a difference between the network output for the training image and the target network output for the training image.

2. The method of claim 1, wherein each of the plurality of image patch generation schemes divides the input image into non-overlapping patches of a corresponding size, and wherein the corresponding size is different for each of the plurality of image patch generation schemes, or wherein each of the plurality of image patch generation schemes divides the input image into patches with a corresponding stride, and wherein the corresponding stride is different for each of the plurality of image patch generation schemes.

3. The method of any preceding claim, wherein the respective target output for each of the training images is a ground truth target output generated based on a label for the training images, or wherein the respective target output for each of the training images is an output generated by a trained teacher neural network by processing the training image.

4. The method of any preceding claim, further comprising:
prior to training the neural network, initializing values of parameters of the neural network based on trained values of parameters of a trained teacher neural network.

5. The method of any preceding claim, wherein the neural network comprises an embedding subnetwork, a self-attention subnetwork, and an output subnetwork, and wherein processing the plurality of image patches using the neural network to generate a network output for the training image comprises:

processing the plurality of image patches using the embedding subnetwork to generate a respective embedding for each of the image patches;
processing an input sequence comprising the respective embeddings for each of the image patches using the self-attention subnetwork to generate a self-attention output for the training image; and
processing the self-attention subnetwork using the output subnetwork to generate the network output for the training image.

6. The method of claim 5, wherein processing the plurality of image patches using the embedding subnetwork to generate a respective embedding for each of the image patches comprises:
for each image patch, applying a set of patch embedding weights to the intensity values of the pixels in the image patch to generate an initial embedding of the image patch.

7. The method of claim 6, wherein the embedding subnetwork has a single set of patch embedding weights that has a first size and that is shared between the plurality of image patch generation schemes, and wherein applying the set of patch embedding weights comprises:

resizing the set of patch embedding weights from the first size to have a size that matches a size of the image patch; and
applying the resized set of patch embedding weights to the intensity values of the pixels in the image patch to generate an initial embedding of the image patch, optionally wherein training the neural network comprises adjusting the set of patch embedding weights that is shared between the plurality of image patch generation schemes.

8. The method of any one of claims 6-7, wherein processing the plurality of image patches using the embedding subnetwork to generate a respective embedding for each of the image patches comprises:
combining the initial embedding of the image patch with a learned positional embedding that corresponds to a position of the image patch within the training image to generate the embedding of the image patch.

9.  The method of claim 7, wherein the embedding subnetwork has a single set of positional embeddings that is shared between the plurality of image patch generation schemes and that includes a respective positional embedding for each of a first set of positions, and wherein applying the set of patch embedding weights comprises:

    generating an interpolated positional embedding that corresponds to the position of the image patch from the single set of positional embeddings; and
    combining the initial embedding of the image patch with the interpolated positional embedding that corresponds to the position of the image patch within the training image to generate the embedding of the image patch, optionally wherein training the neural network comprises adjusting the single set of positional embeddings that is shared between the plurality of image patch generation schemes.

10. The method of any preceding claim, wherein selecting, from a plurality of image patch generation schemes, an image patch generation scheme for the training step comprises:
    sampling an image patch generation scheme from a probability distribution over the plurality of patch generation schemes for the training iteration, optionally wherein the probability distribution is a uniform distribution over the plurality of patch generation schemes, and/or wherein the probability distribution for the training step is one of a sequence of probability distributions that are each associated with a respective subset of the plurality of training steps.

11. The method of any preceding claim, wherein the target output for each of the training items is generated based on an output generated by a text processing neural network.

12. A method performed by one or more computers, the method comprising:

    obtaining data specifying a pre-trained neural network that has been trained by performing the respective operations of the method of any preceding claim; and
    fine-tuning the pre-trained neural network to perform a downstream task.

13. The method of claim 12, wherein fine-tuning the pre-trained neural network to perform a downstream task comprises processing training inputs for the downstream task using only a single, fixed image patch generation scheme, the method optionally further comprising:
    after fine-tuning the pre-trained neural network to perform the downstream task, performing the downstream task using the fine-tuned neural network by processing new inputs for the downstream task using a second image patch generation scheme that is different from the fixed image patch generation scheme, optionally wherein the fixed image patch generation scheme generates a smaller number of image patches than the second image patch generation scheme.

14. A system comprising one or more computers and one or more storage devices storing instructions that when executed by the one or more computers cause the one more computers to perform the operations of the respective method of any one of claims 1-13.

15. One or more computer storage media storing instructions that when executed by one or more computers cause the one more computers to perform the operations of the respective method of any one of claims 1-13.

TRAINING DATA 120

VARIABLE IMAGE PATCH
GENERATION SYSTEM 150

VISION TRANSFORMER NEURAL NETWORK 110

IMAGE PATCH EMBEDDING SYSTEM
160

SELF-ATTENTION LAYER(S) 130

OUTPUT LAYER(S) 140

NEURAL NETWORK TRAINING SYSTEM 100

FIG. 1

IMAGE 202

VARIABLE IMAGE PATCH GENERATION SYSTEM
150

IMAGE PATCH
GENERATION
SCHEME 223

VIT 110    FIRST IMAGE PATCH
222a

● ● ●

Nth IMAGE PATCH
222n

IMAGE PATCH EMBEDDING SYSTEM 160

FIRST IMAGE PATCH
EMBEDDING 232a

● ● ●

Nth IMAGE PATCH
EMBEDDING 232n

SELF-ATTENTION BASED SUBNETWORK 130

FIRST IMAGE PATCH
OUTPUT 242a

● ● ●

Nth IMAGE PATCH
OUTPUT 242n

OUTPUT LAYER(S) 140

CLASSIFICATION OUTPUT 262

FIG. 2

300

```
┌─────────────────────────────────────────────┐
│   OBTAIN FIRST TRAINING IMAGES AND TARGET     │   302
│                 OUTPUTS                        │
└─────────────────────────────────────────────┘
                      │
                      ▼
┌─────────────────────────────────────────────┐
│   SELECT VARIABLE IMAGE PATCH GENERATION      │   304
│                 SCHEME                         │
└─────────────────────────────────────────────┘
                      │
                      ▼
┌─────────────────────────────────────────────┐
│   APPLY SELECTED IMAGE PATCH GENERATION       │   306
│      SCHEME TO EACH TRAINIG IMAGE             │
└─────────────────────────────────────────────┘
                      │
                      ▼
┌─────────────────────────────────────────────┐
│     GENERATE NETWORK OUTPUT FOR EACH          │   308
│              TRAINING IMAGE                    │
└─────────────────────────────────────────────┘
                      │
                      ▼
┌─────────────────────────────────────────────┐
│              MEASURE ACCURACY                  │   310
└─────────────────────────────────────────────┘
                      │
                      ▼
┌─────────────────────────────────────────────┐
│          ADJUST NETWORK PARAMETERS            │   312
└─────────────────────────────────────────────┘
```

FIG. 3

IMAGE 202

150

IMAGE PATCH GENERATION SCHEME
SELECTION 300

IMAGE PATCH SELECTION
SCHEME 230

APPLICATION OF SELECTED IMAGE PATCH
SELECTION SCHEME 310

FIRST IMAGE
PATCH 222a

● ● ●

Nth IMAGE
PATCH 222n

IMAGE PATCH
SELECTION
SCHEME 223

VIT 110

FIG. 4

IMAGE PATCH
GENERATION
SCHEME 223

FIRST IMAGE
PATCH 222a

● ● ●

Nth IMAGE
PATCH 222n

160

IMAGE PATCH
EMBEDDINGS
RESIZER 231

RE-SIZED
EMBEDDING
PARAMETERS
234

EMBEDDINGS GENERATOR 233

FIRST IMAGE
PATCH
EMBEDDING 232a

● ● ●

Nth IMAGE
PATCH
EMBEDDING 232n

FIG. 5

FIG. 6

FIG. 7

Europäisches Patentamt

European Patent Office

Office européen des brevets

# EUROPEAN SEARCH REPORT

Application Number

EP 23 21 1676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/172066 A1 (UNTERTHINER THOMAS [DE] ET AL) 2 June 2022 (2022-06-02)<br>* paragraph [0017] – paragraph [0030] *<br>* paragraph [0050] – paragraph [0070] *<br>* paragraph [0091] *<br>* paragraph [0112] *<br>* figures 1-3 *<br>----- | 1-15 | INV.<br>G06N3/0464<br>G06N3/084<br>G06N3/09 |
| | | | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 27 March 2024 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1676

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2024

| Patent document cited in search report | Publication date | Patent family member(s) | Publication date |
|---|---|---|---|
| US 2022172066 A1 | 02-06-2022 | NONE | |

EPO FORM P0459